# EUROPEAN PATENT APPLICATION

(11) **EP 4 838 093 A1**
(43) Date of publication of application: **11.11.2026**
(21) Application number: 25174379.5
(22) Date of filing: 06.05.2025
(51) Int. Cl.: F03G 7/06, E06B 9/24

(54) **THERMOPNEUMATIC ACTUATOR AND SUN BLIND SYSTEM**

(71) Applicant: Airshade Technologies B.V., 1019 WL Amsterdam (NL); METADECOR B.V., 8263CB Kampen (NL)
(72) Inventor: Znaor, Nikola, 1072 SV Amsterdam (NL); van Leeuwen, Sander, 1072 SV Kampen (NL)
(74) Representative: 't Jong, Bastiaan Jacob

(57) **Abstract**

Thermopneumatic actuator (10) comprising:
- a frame (2, 31);
- an actuating element (4) movable relative to the frame between a first position and a second position;
- a linear pouch motor (6) arranged with one end to the frame and with the other end to the actuating element for driving the actuating element from the first position to the second position;
- spring means for urging the actuating element towards the first position;
- a container (3, 36) with heat expandable fluid in fluid connection with the pouch motor.

## Description

The invention relates to a thermopneumatic actuator and a sun blind system with such a thermopneumatic actuator.

A thermopneumatic actuator is a device that converts thermal energy into mechanical motion through the expansion of a confined gas or fluid. When heated, the working medium (typically a gas or a phase-change fluid) increases in pressure or volume within a sealed chamber, generating a force that displaces a movable element such as a diaphragm, membrane, or piston. This motion can be used to perform mechanical work, such as opening or closing a sun blind system depending on the amount of heat generated by the sun.

For example EP 2933427 discloses such a sun blind system, which includes a cylinder, which is in fluid connection with a vessel exposed to the sun. When the fluid in the vessel is heated, the fluid expands and will push the piston of the cylinder to one end of the cylinder. This movement is transferred via the piston rod to the operating mechanism of a sun blind system.

Because the piston moves through the cylinder and needs to be properly sealed, there is also considerable friction, which needs to be overcome by the expansion of the fluid. This reduces the power of the thermopneumatic actuator available for operating a sun blind system. Furthermore, the production costs are relative high due to the required accuracy.

It is an object of the invention to reduce or even remove the above mentioned disadvantages.

This object is achieved according to the invention with a thermopneumatic actuator comprising:
- a frame;
- an actuating element movable relative to the frame between a first position and a second position;
- a linear pouch motor arranged with one end to the frame and with the other end to the actuating element for driving the actuating element from the first position to the second position;

- spring means for urging the actuating element towards the first position;
- a container with heat expandable fluid in fluid connection with the pouch motor.

A linear pouch motor is a type of actuator that generates linear motion through the expansion of a sealed, flexible pouch or bladder containing a heat expandable fluid. When the fluid is heated, the pouch expands in a controlled manner, producing a displacement along a linear axis. A pouch motor is typically made from two airtight layers, which are placed on top of each other and are sealed together along the peripheral edge. An inlet port is provided for connection with the container with heat expandable fluid.

Using a container with heat expandable fluid in fluid connection with the pouch motor, the expanding volume is increased considerable in contrast when only the volume of the pouch motor were to be used. As a result the force of the pouch motor, being operated by heat expanding fluid, is increased.

The spring means are provided for urging the actuating element towards the first position, such when the expandable fluid is cooled down, and the pouch motor deflates, the actuating element is brought back towards the first position.

The actuating element can be used to move for example a sun blind or open and close a window for ventilation.

In a preferred embodiment of the thermopneumatic actuator according to the invention, the pouch motor comprises a pouch with a number of parallel elongate compartments inflatable to parallel, substantially cylindrical shaped compartments.

By providing a number of parallel elongate compartments in the pouch, the stroke of the pouch motor is substantially increased.

In a further embodiment of the thermopneumatic actuator according to the invention the actuating element is rotatable arranged to the frame around a rotation axis and wherein the other end of the linear pouch motor is arranged to the actuating element at a distance from the rotation axis and wherein the driving direction of the pouch motor is perpendicular to the rotation axis.

In this embodiment the linear movement of the pouch motor is converted into a rotational movement by arranging the actuation element rotatable around a rotating axis.

In a further preferred embodiment of the thermopneumatic actuator according to the invention, the frame is an elongate housing with a guide element guided in the housing in longitudinal direction, wherein the actuating element is a rod arranged with one end to the guide element and extending through a first end of the elongate housing, wherein the spring means are arranged between the first end of the housing and the guide element and wherein the pouch motor is arranged in the housing between the guide element and the second end of the elongate housing.

The housing provides constraints to expansion and movement of the pouch motor, such that the expansion of the pouch motor due to the expansion of the fluid, ensures an optimal movement in linear direction. Furthermore, the use of a rod as actuating element makes this embodiment resemble a known pneumatic actuator. As a result the thermopneumatic actuator can easily be applied in applications, where a pneumatic actuator is used.

In yet another preferred embodiment of the thermopneumatic actuator according to the invention, a one-way valve is in fluid connection with the container, which one-way valve opens when the pressure in the container is lower than the ambient pressure.

When the ambient pressure changes due to weather changes, the effectiveness of the thermopneumatic actuator could change. So, when the heat expandable fluid is cooled down, for example at night, some fluid could enter the container via the one-way valve and equalize the pressure of the heat expandable fluid with the ambient pressure. If air is used as heat expandable fluid, then a open connection with the one-way valve can be provided. If another fluid is used, than a non pressurized supply container could be connected to the one-way valve to supply the required fluid.

The invention also relates to a sun blind system comprising:
- a support structure;
- one or more shading elements arranged to the support structure and movable between a shading position and a non-shading position;
- a mechanism connected to the one or more shading elements for moving the one or more shading elements between the shading position and the non-shading position,
wherein the mechanism is actuated by a thermopneumatic actuator according to the invention.

A very advantageous application of the thermopneumatic actuator according to the invention is in a sun blind system. When the sun shines and generates heat, it is typically desired to move a sun blind system into a shading position. And when the sun goes away and no longer provide heat, it is desired to move the sun blind system into a non-shading position. This is easily achieved by mounting a thermopneumatic actuator according to the invention in a sun blind system and putting the container with heat expandable fluid in view of the sun, such that the container can be heated by the sun.

In a preferred embodiment of the sun blind system according to the invention the container with heat expandable fluid of the thermopneumatic actuator is arranged to at least one shading element.

The shading element is typically directed at the sun to block the heat of the sun. By arranging the container to the shading element, this heat can be absorbed in the heat expandable fluid to control the thermopneumatic actuator.

In a further preferred embodiment of the sun blind system according to the invention, at least one shading element is formed by the container of the thermopneumatic actuator.

Especially at large buildings, the shading elements are sufficiently large to have an inner volume, which can function as a container for the heat expandable fluid.

Yet a further embodiment of the sun blind system according to the invention, further comprises a damper arranged between the support structure and the mechanism to dampen any external forces on the sun blind system, in particular wind forces.

Instead of operating the mechanism of a sun blind system with the thermopneumatic actuator according to the invention, the thermopneumatic actuator can also be used to operate the mechanism of a ventilation system, such as a window.

These and other features of the invention will be elucidated in conjunction with the accompanying drawings.
Figure 1A and 1B show a schematic view of a first embodiment of a thermopneumatic actuator according to the invention in two different positions.
Figure 2A and 2B show a perspective view of a second embodiment of a thermopneumatic actuator according to the invention in two different positions.
Figure 3A shows a perspective view of an embodiment of a sun blind system according to the invention.
Figure 3B shows a perspective and cross-sectional view of a shading element of the sun blind system of figure 3A.
Figure 3C shows a perspective view of the actuating mechanism of the sun blind system of figure 3A.

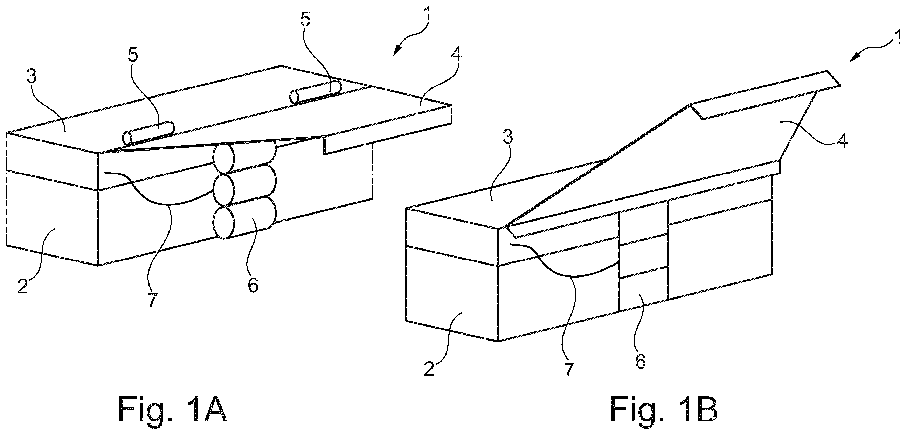

Figure 1A shows a schematic view of an embodiment of a thermopneumatic actuator 1 according to the invention. The actuator 1 has a frame 2 on which a container 3 with a heat expandable fluid is arranged. A plate 4, being an actuating element, is arranged via hinges 5 to the frame 2 and container 3.

A pouch motor 6, having three elongate, parallel compartments, is mounted between the actuating element 4 and the frame 2. The pouch motor 6 is in fluid connection via line 7 with the container 3.

In figure 1A the heat expandable fluid in the container 3 is heated and the pouch motor 6 is pressurized such that it pulls the plate 4 to a horizontal position.

In figure 1B the heat expandable fluid in the container 3 is cooled down and the pouch motor 6 is deflated. Due to springs mounted in the hinges (not shown) the plate 4 is tilted upwardly.

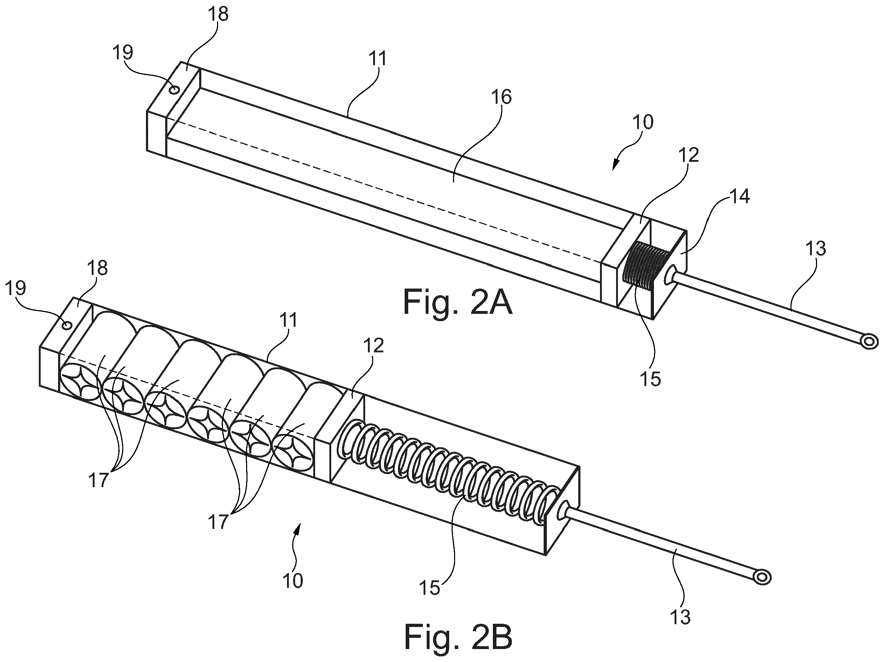

Figure 2A shows a perspective view of a second embodiment of a thermopneumatic actuator 10 according to the invention. The actuator 10 has a elongate box-like housing 11 with a guide element 12 guided in the housing 11 in longitudinal direction. A rod 13 is arranged with one end to the guide element 12 and extends through a first end 14 of the elongate housing 11. A spring 15 is arranged between the first end 14 of the housing 11 and the guide element 12.

A pouch motor 16, 17 is arranged in the housing 11 between the guide element 12 and the second end 18 of the elongate housing 11. The pouch motor 16, 17 is in fluid connection via a connection 19 with a heat expandable fluid from a container (not shown).

Figure 2A shows the position in which the pouch motor 16, 17 is deflated and the spring 15 has pulled the guide element 12 towards the first end 14 fully extending the rod 13 outside of the housing 11.

Figure 2B shows the position in which the pouch motor 16, 17 has been expanded by the heat expandable fluid and the compartments 17 of the pouch motor 16 are fully inflated. This pulls the guide element 12 towards the second end 18 of the housing 11 and retracts the rod 13.

This embodiment 10 can easily provide a replacement for a conventional pneumatic cylinder.

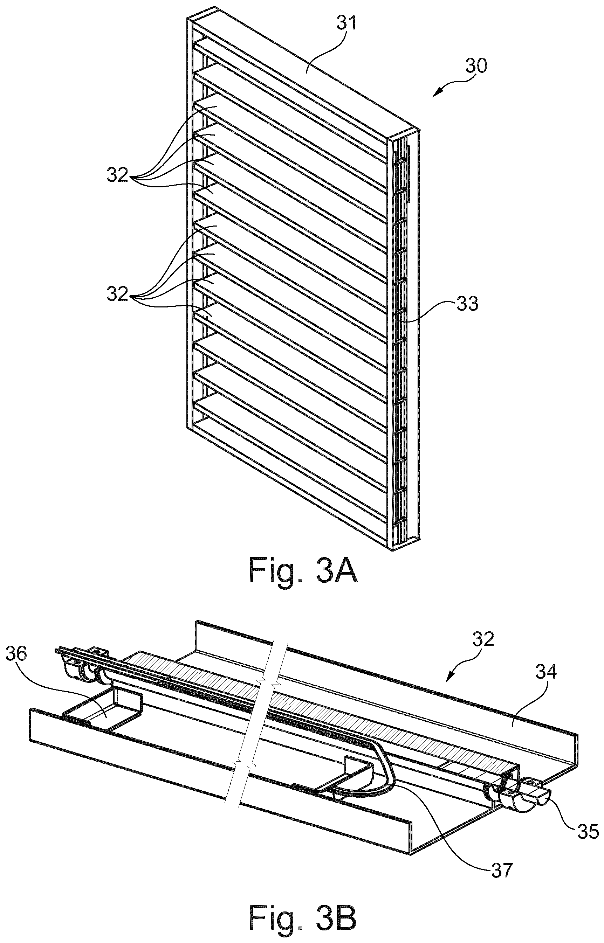

Figure 3A shows an embodiment of a sun blind system 30 according to the invention. The sun blind system 30 has a frame 31 as a support structure, in which a number of shading elements 32 are arranged in parallel to each other.

Each of the shading elements 32 can rotated along a elongate rotation axis. A mechanism 33 connects the shading elements 32, such that with one linear movement the shading elements 32 can be moved from the non-shading position (as shown in figure 3A) to a shading position in which the shading elements 32 form a flush and closed surface.

Figure 3B shows a cross-sectional view of a shading element 32. The shading element 32 has a box shaped housing 34 through which the rotation axis 35 runs. Within the housing 34 a container 36 with heat expandable fluid is mounted. This container 36 is connected with a line 37, which runs axially through the rotation axis 35 with containers of other shading elements 32.

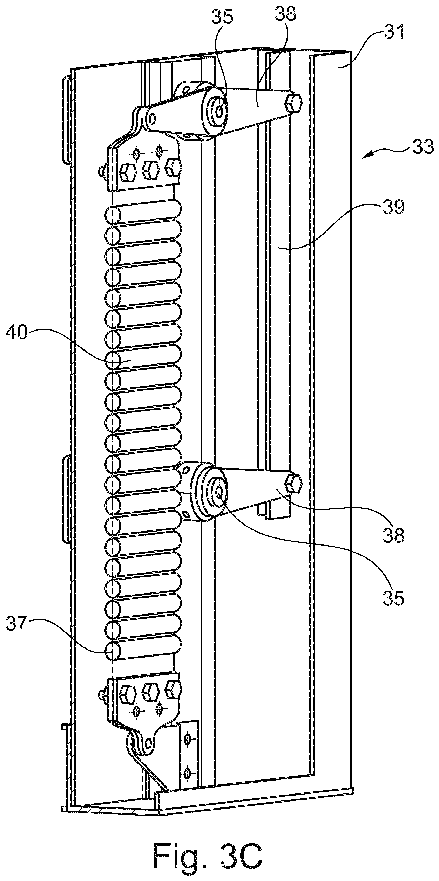

Figure 3C shows a detail of the mechanism 33, which connects the rotation axes 35 of shading elements 32 via levers 38 and a connecting rod 39. A pouch motor 40 is mounted with one end to one of the levers 38 and with the other end to the frame shaped support structure 31. The pouch motor 40 is in fluid connection with the containers 36 via line 37.

This allows for the heat of the sun, which is directed to the shading elements 32, to heat the heat expandable fluid in the containers 36 and as a result have the pouch motor 40 to expand and close the sun blind system 30. When the sun goes away, the heat expandable fluid will cool down and the pouch motor 40 will deflate. Either due to the weight of the levers 38 and connecting rod 39 or a spring (not shown) the shading elements 32 will return to the open position.

## Claims

1. Thermopneumatic actuator comprising:
- a frame;
- an actuating element movable relative to the frame between a first position and a second position;
- a linear pouch motor arranged with one end to the frame and with the other end to the actuating element for driving the actuating element from the first position to the second position;
- spring means for urging the actuating element towards the first position;
- a container with heat expandable fluid in fluid connection with the pouch motor.

2. Thermopneumatic actuator according to claim 1,
wherein the pouch motor comprises a pouch with a number of parallel elongate compartments inflatable to parallel, substantially cylindrical shaped compartments.

3. Thermopneumatic actuator according to claim 1 or 2, wherein the actuating element is rotatable arranged to the frame around a rotation axis and wherein the other end of the linear pouch motor is arranged to the actuating element at a distance from the rotation axis and wherein the driving direction of the pouch motor is perpendicular to the rotation axis.

4. Thermopneumatic actuator according to claim 1 or 2, wherein the frame is an elongate housing with a guide element guided in the housing in longitudinal direction, wherein the actuating element is a rod arranged with one end to the guide element and extending through a first end of the elongate housing, wherein the spring means are arranged between the first end of the housing and the guide element and wherein the pouch motor is arranged in the housing between the guide element and the second end of the elongate housing.

5. Thermopneumatic actuator according to any of the preceding claims, wherein a one-way valve is in fluid connection with the container, which one-way valve opens when the pressure in the container is lower than the ambient pressure.

6. Sun blind system comprising:
- a support structure;
- one or more shading elements arranged to the support structure and movable between a shading position and a non-shading position;
- a mechanism connected to the one or more shading elements for moving the one or more shading elements between the shading position and the non-shading position,
wherein the mechanism is actuated by a thermopneumatic actuator according to any of the preceding claims.

7. Sun blind system according to claim 6, wherein the container with heat expandable fluid of the thermopneumatic actuator is arranged to at least one shading element.

8. Sun blind system according to claim 7, wherein at least one shading element is formed by the container of the thermopneumatic actuator.

9. Sun blind system according to any of the claims 6 **-** 8, further comprising a damper arranged between the support structure and the mechanism to dampen any external forces on the sun blind system, in particular wind forces.
